# FASCICULE DE BREVET EUROPEEN

(11) **EP 3 878 607 B1**
(45) Date de publication et mention de la délivrance du brevet: **24.09.2025**
(21) Numéro de dépôt: 21159876.8
(22) Date de dépôt: 01.03.2021
(51) Int. Cl.: B25J 15/00, B25J 15/06, B65G 47/91, B23P 19/02, B25J 11/00, F16B 11/00

(54) **DISPOSITIF DE DEPOSE D'AU MOINS UNE PASTILLE ADHESIVE SUR UN ELEMENT DE VEHICULE AUTOMOBILE**
VORRICHTUNG ZUM AUFBRINGEN MINDESTENS EINES KLEBEPADS AUF EIN KRAFTFAHRZEUGELEMENT
DEVICE FOR APPLYING AT LEAST ONE ADHESIVE PAD ON AN ELEMENT OF A MOTOR VEHICLE

(30) Priorité: 10.03.2020 FR 2002376
(43) Date de publication de la demande: 15.09.2021
(60) Demande divisionnaire: 22191572.1
(73) Titulaire: ADHEX TECHNOLOGIES, 21300 Chenôve (FR)
(72) Inventeur: DE LA BROSSE, Roland, 21000 Dijon (FR)
(74) Mandataire: Cabinet Bleger-Rhein-Poupon

(56) Documents cités:
- DE-A1- 102014 004 045
- DE-U1- 202015 102 826
- US-A1- 2011 209 320
- US-A1- 2019 300 221

## Description

La présente invention concerne un dispositif de dépose d'au moins une pastille adhésive sur un élément de véhicule automobile, et plus particulièrement un dispositif selon le préambule de la revendication 1.

Un dispositif adapté pour déposer une pastille adhésive sur un élément de véhicule automobile et présentant toutes les caractéristiques du préambule de la revendication 1 est connu du document DE 20 2015 102826 U1.

L'invention concerne le domaine de la fabrication des dispositifs configurés pour prendre un objet, déplacer cet objet, positionner cet objet en un endroit approprié d'un élément de véhicule automobile et pour l'appliquer sur cet élément, ceci en vue d'équiper un tel élément avec un tel objet.

Sans n'y être aucunement limitée, cette invention trouvera une application particulièrement appropriée lorsqu'il s'agit d'équiper un élément de véhicule automobile constitué par une structure de véhicule automobile avec une pastille adhésive, plus particulièrement lorsqu'il s'agit de fermer une ouverture que présente une telle structure avec une telle pastille adhésive.

L'on connait, d'ores et déjà, des dispositifs pour déposer au moins une pastille adhésive sur un élément de véhicule automobile.

En particulier, on connait un dispositif, qui est destiné à équiper le bras articulé d'un robot, et qui comporte un doigt pourvu d'une ventouse destinée à recevoir une pastille adhésive. Par l'intermédiaire du bras articulé, le doigt est positionné à proximité de l'ouverture à obturer de l'élément de véhicule automobile et la pastille adhésive est déposée sur cet élément de véhicule automobile, ceci en vue d'obturer ladite ouverture.

Ce dispositif présente, cependant, des inconvénients. Un premier inconvénient consiste en ce que le dispositif se déplace en même temps que l'élément de véhicule automobile sur une chaîne de montage de sorte que le positionnement du doigt et de la pastille adhésive par rapport à l'ouverture à obturer est approximatif ce qui peut se traduire par une mauvaise obturation de l'ouverture à obturer. Un autre inconvénient consiste en ce que le dispositif comporte un doigt unique alors que l'élément de véhicule automobile peut comporter plusieurs ouvertures à obturer, a fortiori de tailles différentes. Pour assurer l'obturation de ces différentes ouvertures, le bras articulé et le dispositif doivent déposer une pastille adhésive à la fois ce qui implique, pour le bras articulé et le dispositif, d'accomplir, pour chaque ouverture à obturer, un cycle qui consiste à prendre une pastille adhésive sur une bobine ou analogue, d'amener cette pastille adhésive à proximité de l'ouverture à obturer qui est déportée par rapport à ladite bobine, de déposer cette pastille adhésive sur l'élément de véhicule, et de venir prendre une nouvelle pastille adhésive sur une bobine qui peut être différente de la bobine précédente, notamment lorsque la pastille adhésive est de taille différente de la précédente. On observera que, lorsque l'élément de véhicule automobile comporte une pluralité d'ouvertures à obturer, l'accomplissement de l'ensemble des cycles nécessaires à l'obturation de toutes ces ouvertures est particulièrement long et impacte les opérations de montage des pièces sur l'élément de véhicule automobile.

L'on connait, également, un dispositif qui comporte une pluralité de doigts, qui sont agencés à l'instar des pales d'une hélice, qui s'étendent de manière radiale, et qui comportent, chacun à son extrémité libre, un organe de réception d'un clip. Ces organes de réception sont, alors, agencés selon un cercle. Ce dispositif présente un premier inconvénient qui consiste en ce que le positionnement du doigt comportant le clip à déposer manque de précision de sorte qu'un tel doigt risque, soit d'être trop éloigné de l'endroit où il convient de déposer le clip ce qui ne permet pas de déposer un tel clip de manière appropriée, soit de venir heurter l'élément de véhicule automobile et d'y occasionner des dégradations. Un deuxième inconvénient consiste en ce que, du fait de l'agencement radial des doigts du dispositif, ce dispositif présente un encombrement qui entrave son déplacement, qui peut amener le dispositif à heurter l'élément de véhicule automobile, et/ou qui peut empêcher le doigt d'atteindre l'endroit où il convient de déposer le clip.

La présente invention se veut de remédier aux inconvénients des dispositifs de l'état de la technique.

A cet effet, l'invention concerne un dispositif selon la revendication 1.

Selon une caractéristique particulière, le support comporte au moins une platine sur laquelle sont montés les moyens de montage en déplacement des doigts de la pluralité de doigts et/ou les moyens d'entraînement en déplacement des moyens de montage en déplacement.

Selon une caractéristique particulière, ledit au moins un organe de montage est de type souple ou de type articulé.

Une autre caractéristique concerne le fait que ledit au moins un organe de montage comporte une portion, qui est positionnée à proximité de l'extrémité proximale du support, qui s'étend par-dessus les deux organes de renvoi et/ou qui coopère avec ces deux organes de renvoi, et de laquelle ledit au moins un doigt actif est rendu solidaire.

Encore une autre caractéristique concerne le fait que les moyens de montage comportent une pluralité d'embases qui sont fixées, chacune, sur ledit au moins un organe de montage tandis que chaque doigt de ladite pluralité de doigts est solidarisé de l'une de ces embases.

Une autre caractéristique consiste en ce que ledit au moins un organe de montage est configuré pour se déplacer selon une direction déterminée, que les moyens de montage comportent des moyens de fixation pour fixer chaque embase de la pluralité d'embases sur ledit au moins un organe de montage, et que les moyens de fixation d'une telle embase sont alignés selon une direction perpendiculaire à la direction de déplacement dudit au moins un organe de montage.

En ce qui concerne les doigts de la pluralité de doigts, ceux-ci comportent, chacun, d'une part, une première portion qui est solidaire des moyens de montage en déplacement et, d'autre part, une deuxième portion, qui comporte le moyen de réception, et qui est mobile par rapport à la première portion d'un tel doigt, ceci entre une position rétractée et une position déployée par rapport à la première portion.

En fait, la deuxième portion d'un tel doigt s'étend selon un axe tandis que le moyen de réception s'étend selon un autre axe qui forme un angle non nul (de préférence compris entre 05° et 45°) avec l'axe selon lequel s'étend la deuxième portion du doigt.

Une autre caractéristique concerne le fait que le support comporte un actionneur qui comporte un organe d'actionnement qui est mobile entre une position rétractée et une position déployée dans laquelle cet organe d'actionnement, d'une part, traverse un des orifices traversant que présente ledit au moins un organe de montage et/ou l'orifice traversant que présente l'une des embases des moyens de montage et, d'autre part, coopère avec la deuxième portion de l'un des doigts de la pluralité de doigts, plus particulièrement du doigt actif.

Encore une autre caractéristique concerne le fait que les moyens d'entraînement comportent, d'une part, un moteur d'entraînement qui est monté sur le support et, d'autre part, un organe d'entraînement, qui est monté en rotation sur le support, qui est entraîné en rotation par le moteur, qui coopère avec les moyens de montage, et qui entraîne ces moyens de montage.

De plus, le dispositif comporte des moyens de positionnement et/ou de réglage de la position des moyens d'entraînement par rapport aux moyens de montage.

Ainsi, dans le dispositif selon l'invention, le support présente une forme allongée ainsi qu'une extrémité proximale par rapport à laquelle ledit au moins un doigt actif fait saillie. Une telle caractéristique permet, avantageusement, de remédier au problème d'encombrement des dispositifs de l'état de la technique qui entrave le déplacement de ces dispositifs de l'état de la technique et, ainsi, audit au moins un doigt actif d'être positionné de manière appropriée par rapport à l'ouverture qu'il convient d'obturer par l'intermédiaire de la pastille adhésive reçue par un tel doigt actif, ceci quelle que soit la conformation de l'élément de véhicule automobile comportant ladite ouverture à obturer.

De plus, une telle forme allongée permet, avantageusement, d'augmenter le nombre de doigts (et, par conséquent, le nombre de pastilles adhésives à déposer), ceci par rapport à un dispositif de forme différente, notamment de forme ronde.

Dans ce dispositif, ledit au moins un organe de montage comporte une portion, qui s'étend par-dessus les deux organes de renvoi et/ou qui coopère avec ces deux organes de renvoi, et de laquelle ledit au moins un doigt actif est rendu solidaire. Ceci permet, avantageusement, au doigt actif d'adopter une position stable par rapport au support et, ainsi, de pouvoir positionner la pastille adhésive de manière appropriée par rapport à l'ouverture que cette pastille adhésive doit obturer.

Dans ce dispositif, les moyens de montage comportent une pluralité d'embases qui sont fixées, chacune, sur ledit au moins un organe de montage tandis que chaque doigt de ladite pluralité de doigts est solidarisé de l'une de ces embases. Ceci permet, avantageusement, et en cas de défaillance ou de dégradation d'un tel doigt de faciliter le démontage et le remplacement de ce doigt.

Dans ce dispositif, les embases de la pluralité d'embases sont configurées pour s'étendre par-dessus les deux organes de renvoi, ceci lorsqu'une telle embase est positionnée au niveau de l'extrémité proximale du support. Cette caractéristique permet, avantageusement, à une telle embase de prendre appui sur les deux organes de renvoi et, ainsi, d'augmenter la stabilité du doigt actif associé à cette embase, ceci par rapport au support et, ainsi, d'optimiser la position de la pastille adhésive par rapport à l'ouverture que cette pastille adhésive doit obturer.

Dans ce dispositif, les doigts de la pluralité de doigts comportent, chacun, une deuxième portion, qui comporte le moyen de réception d'une pastille adhésive, et qui est mobile par rapport à la première portion d'un tel doigt, ceci entre une position rétractée et une position déployée par rapport à la première portion. Cette caractéristique permet, avantageusement, d'une part et dans un premier temps, de positionner le dispositif en sorte que le doigt actif soit à proximité de l'ouverture à obturer de l'élément de véhicule automobile et, d'autre part et dans un deuxième temps, d'amener la deuxième portion de ce doigt actif dans sa position déployée, ceci en sorte que la pastille adhésive soit déposée sur l'élément de véhicule automobile.

Dans ce dispositif, la deuxième portion d'un tel doigt s'étend selon un axe tandis que le moyen de réception s'étend selon un autre axe qui forme un angle non nul avec l'axe selon lequel s'étend la deuxième portion du doigt. Cette caractéristique permet, avantageusement, de déposer la pastille adhésive sur l'élément de véhicule automobile, ceci avec un effet de lissage et à l'instar d'un dépôt réalisé à la main.

Ce dispositif comporte, aussi, des moyens de positionnement et/ou de réglage de la position des moyens d'entraînement par rapport aux moyens de montage. Cette caractéristique permet, avantageusement, d'adapter les moyens d'entraînement aux moyens de montage, ceci pour un entraînement approprié de ces moyens de montage. En particulier, cette caractéristique permet d'adapter ces moyens d'entraînement à une usure ou à un relâchement de ces moyens de montage, voire à un remplacement de ces moyens de montage par des moyens de montage configurés pour recevoir un nombre différent de doigts.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

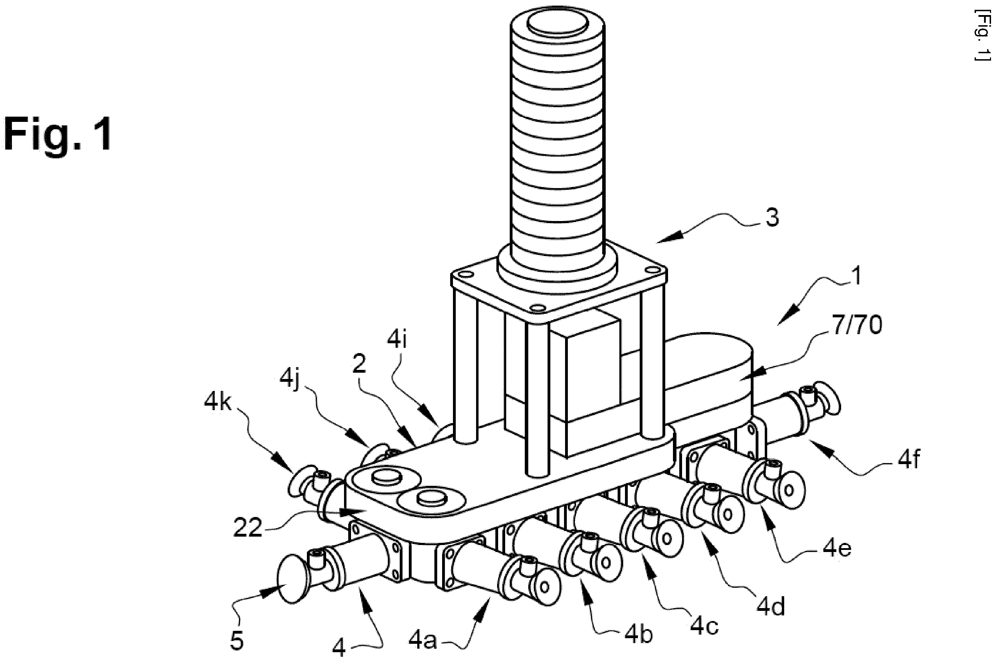

[Fig.1] représente une vue schématisée et en perspective d'un dispositif conforme à l'invention.
[Fig.2] représente une vue schématisée et en perspective du dispositif illustré figure 1, ceci selon un autre angle de visualisation.
[Fig.3] représente une vue schématisée et correspondant à un détail d'une partie du dispositif illustré figure 2, plus particulièrement au niveau d'une extrémité proximale du support de ce dispositif.

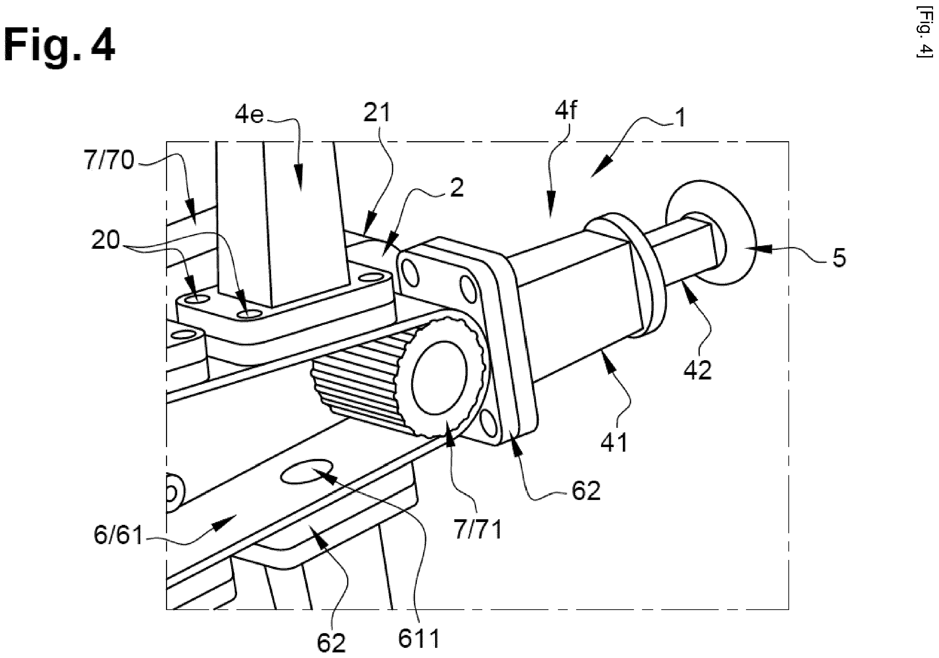

[Fig.4] représente une vue schématisée et correspondant à un détail d'une partie du dispositif illustré figure 2, plus particulièrement au niveau d'une extrémité distale du support de ce dispositif, opposée à l'extrémité proximale de ce support.

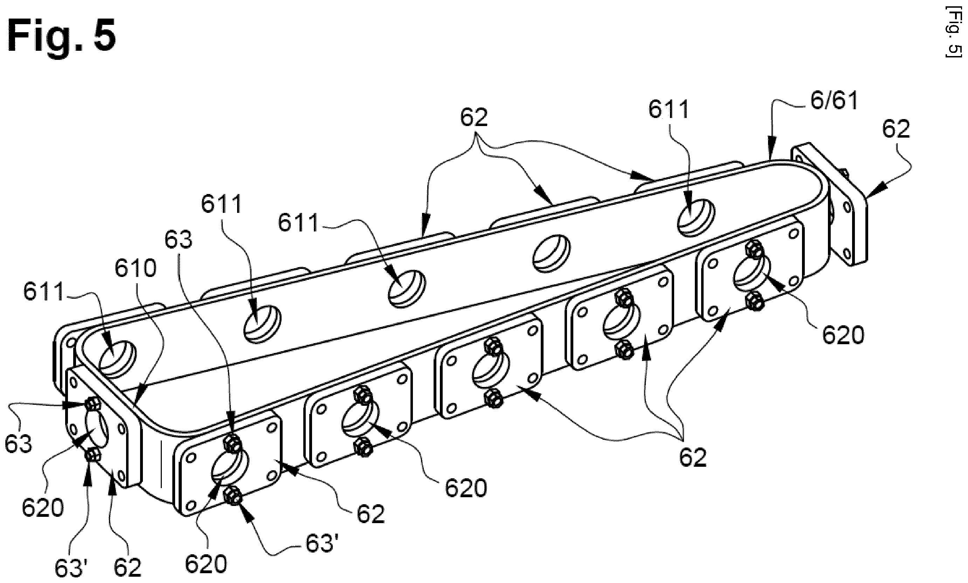

[Fig.5] représente une vue schématisée d'un organe de montage que comportent les moyens de montage du dispositif conforme à l'invention.
[Fig.6] représente une vue schématisée, en coupe et en détail d'un doigt que comporte le dispositif conforme à l'invention, ceci en position rétractée d'une deuxième portion de ce doigt par rapport à une première portion de ce doigt.
[Fig.7] représente une vue schématisée, en coupe et en détail d'un doigt que comporte le dispositif conforme à l'invention, ceci en position déployée d'une deuxième portion de ce doigt par rapport à une première portion de ce doigt.

La présente invention concerne le domaine de la fabrication des dispositifs configurés pour prendre un objet, déplacer cet objet, positionner cet objet en un endroit approprié d'un élément de véhicule automobile et pour l'appliquer sur cet élément, ceci en vue d'équiper un tel élément avec un tel objet.

L'invention concerne, alors, plus particulièrement, un dispositif 1 de dépose d'au moins une pastille adhésive sur un élément de véhicule automobile (plus particulièrement sur une structure de véhicule automobile), ceci en vue d'obturer une ouverture que présente cet élément de véhicule automobile.

Ce dispositif 1 comporte un support 2 qui est configuré pour être rendu solidaire d'un bras articulé 3 que comporte un robot.

Ce dispositif 1 comporte une pluralité de doigts (4, 4a, 4b, 4c, 4d, 4e, 4f, 4g, 4h, 4i, 4j, 4k), qui sont mobiles, chacun, par rapport au support 2, et qui comportent, chacun, un moyen de réception 5 configuré pour recevoir une pastille adhésive dans l'attente d'être déposée, plus particulièrement sur un élément de véhicule automobile et en vue d'obturer une ouverture que présente cet élément de véhicule automobile.

Les doigts (4, 4a, 4b, 4c, 4d, 4e, 4f, 4g, 4h, 4i, 4j, 4k) de cette pluralité de doigts (4, 4a, 4b, 4c, 4d, 4e, 4f, 4g, 4h, 4i, 4j, 4k) comportent au moins un doigt actif 4 qui adopte, par rapport au support 2, au moins une position active de dépôt d'une telle pastille adhésive. A ce propos, on observera que cette position active de dépôt correspond à la position qu'adopte un tel doigt actif 4, ceci au moins au moment de déposer la pastille adhésive sur l'élément de véhicule automobile.

Ce dispositif 1 comporte, également, des moyens de montage 6 qui sont configurés pour monter les doigts (4, 4a, 4b, 4c, 4d, 4e, 4f, 4g, 4h, 4i, 4j, 4k) de la pluralité de doigts (4, 4a, 4b, 4c, 4d, 4e, 4f, 4g, 4h, 4i, 4j, 4k), ceci en déplacement par rapport au support 2.

Ce dispositif 1 comporte, aussi, des moyens d'entraînement 7 qui sont configurés pour entraîner les moyens de montage 6 (et, par conséquent, les doigts (4, 4a, 4b, 4c, 4d, 4e, 4f, 4g, 4h, 4i, 4j, 4k) de la pluralité de doigts (4, 4a, 4b, 4c, 4d, 4e, 4f, 4g, 4h, 4i, 4j, 4k)), ceci en déplacement par rapport au support 2.

Ces moyens d'entraînement 7 permettent, alors, de positionner l'un des doigts (4, 4a, 4b, 4c, 4d, 4e, 4f, 4g, 4h, 4i, 4j, 4k) de la pluralité de doigts (4, 4a, 4b, 4c, 4d, 4e, 4f, 4g, 4h, 4i, 4j, 4k) dans la position active de dépôt d'une pastille adhésive. Ces moyens d'entraînement 7 permettent, alors, également, de positionner, successivement, chaque doigt d'un ensemble de doigts (4, 4a, 4b, 4c, 4d, 4e, 4f, 4g, 4h, 4i, 4j, 4k) de cette pluralité de doigts (4, 4a, 4b, 4c, 4d, 4e, 4f, 4g, 4h, 4i, 4j, 4k), ceci dans la position active de dépôt.

A ce propos, on observera que le positionnement des doigts d'un tel ensemble de doigts (4, 4a, 4b, 4c, 4d, 4e, 4f, 4g, 4h, 4i, 4j, 4k) dans la position active de dépôt peut se faire dans l'ordre dans lequel ces doigts se succèdent au sein du dispositif 1, plus particulièrement au sein des moyens de montage 6. Cependant, le positionnement de ces doigts d'un tel ensemble de doigts (4, 4a, 4b, 4c, 4d, 4e, 4f, 4g, 4h, 4i, 4j, 4k) dans la position active de dépôt peut, aussi, se faire de manière indépendante de l'ordre dans lequel ces doigts se succèdent au sein du dispositif 1 ce qui permet, avantageusement, d'optimiser la dépose de pastilles adhésives sur l'élément de véhicule automobile.

Selon l'invention, le support 2 présente une forme allongée. Selon un mode préféré de réalisation, un tel support 2 présente une telle forme allongée et s'étend selon un axe.

De plus, ce support 2 présente, d'une part, au moins une extrémité proximale 20 qui correspond à l'extrémité du support 2 qui vient se positionner à proximité de l'élément de véhicule automobile sur lequel il convient de déposer une pastille adhésive et, d'autre part, une extrémité distale 21 qui correspond à l'extrémité du support 2 qui est opposée à l'extrémité proximale 20.

Également selon l'invention, ledit au moins un doigt actif 4 fait saillie par rapport à ladite au moins une extrémité proximale 20 du support 2. De manière particulière, ledit au moins un doigt actif 4 s'étend dans la direction de l'axe selon lequel s'étend le support 2.

Selon une autre caractéristique et tel que visible sur les figures en annexe, ce support 2 comporte au moins une platine 22 sur laquelle sont montés les moyens de montage 6 (plus particulièrement en déplacement) des doigts (4, 4a, 4b, 4c, 4d, 4e, 4f, 4g, 4h, 4i, 4j, 4k) de la pluralité de doigts (4, 4a, 4b, 4c, 4d, 4e, 4f, 4g, 4h, 4i, 4j, 4k) et/ou les moyens d'entraînement 7 (plus particulièrement en déplacement) de ces moyens de montage 6 (plus particulièrement en déplacement).

En ce qui concerne ces moyens de montage 6, ceux-ci 6 comportent, d'une part, au moins un organe de renvoi (60 ; 60'), qui est monté en rotation sur le support 2, plus particulièrement sur la platine 22 que comporte ce support 2.

Un tel organe de renvoi (60 ; 60') est, de préférence, positionné à proximité de l'extrémité proximale 20 du support 2.

Selon un mode de réalisation préféré, ces moyens de montage 6 comportent deux organes de renvoi (60 ; 60') qui sont positionnés à proximité de l'extrémité proximale 20 du support 2 ainsi que de part et d'autre de l'axe selon lequel s'étend le support 2, notamment de manière symétrique par rapport à cet axe.

Un tel organe de renvoi (60 ; 60') peut, chacun, être constitué par un pignon, une roue dentée ou analogue.

D'autre part, ces moyens de montage 6 comportent au moins un organe de montage 61, duquel les doigts (4, 4a, 4b, 4c, 4d, 4e, 4f, 4g, 4h, 4i, 4j, 4k) de la pluralité de doigts (4, 4a, 4b, 4c, 4d, 4e, 4f, 4g, 4h, 4i, 4j, 4k) sont rendus solidaires, et qui coopère avec ledit au moins un organe de renvoi (60 ; 60').

A ce propos, on observera que ledit au moins un organe de montage 61 peut être de type articulé et être, alors, constitué par une chaîne ou analogue.

Cependant et selon un mode de réalisation préféré, ledit au moins un organe de montage 61 peut être de type souple. Dans ce cas, un tel organe de montage 61 peut être constitué par une courroie, une ceinture ou analogue, de préférence crantée.

Une autre caractéristique concerne le fait que ledit au moins un organe de montage 61 comporte une portion 610, qui est positionnée à proximité de l'extrémité proximale 20 du support 2, de laquelle ledit au moins un doigt actif 4 est rendu solidaire (directement ou indirectement comme il sera décrit ci-dessous), et qui s'étend par-dessus les deux organes de renvoi (60 ; 60') et/ou qui coopère avec ces deux organes de renvoi (60 ; 60').

A ce propos, on observera que ladite portion 610 dudit au moins un organe de montage 61 est, de préférence, tangente aux deux organes de renvoi (60 ; 60').

Une autre caractéristique concerne le fait que les moyens de montage 6 comportent, encore, une pluralité d'embases 62 qui sont fixées, chacune, sur ledit au moins un organe de montage 61, ceci par l'intermédiaire de moyens de fixation (63 ; 63') que comportent ces moyens de montage 6.

Le dispositif conforme à l'invention comporte, alors, un ensemble qui comporte, d'une part, ledit au moins un organe de montage 61, d'autre part, lesdites embases 62 de la pluralité d'embases 62 et, d'autre part encore, les moyens de fixation (63 ; 63') de ces embases 62 sur ledit au moins un organe de montage 61.

A ce propos, on observera que les embases 62 de la pluralité d'embases 62 sont configurées pour s'étendre par-dessus les deux organes de renvoi (60 ; 60'), ceci lorsqu'une telle embase 62 est positionnée au niveau de l'extrémité proximale 20 du support 2.

Encore une autre caractéristique concerne le fait que ledit au moins un organe de montage 61 présente une pluralité d'orifices traversants 611 tandis que les embases 62 de la pluralité d'embases 62 présentent, chacune, un orifice traversant 620 qui se situe, chacun, en regard de l'un des orifices traversants 611 dudit au moins un organe de montage 61.

Tel que mentionné ci-dessus, les moyens de montage 6 comportent des moyens de fixation (63 ; 63') pour fixer chaque embase 62 de la pluralité d'embases 62 sur ledit au moins un organe de montage 6, plus particulièrement sur ledit au moins un organe de montage 61 que comportent ces moyens de montage 6. A ce propos, on observera que ces moyens de fixation (63 ; 63') sont, alors, positionnés de part et d'autre de l'orifice traversant 620 que comporte une telle embase 62.

Une autre caractéristique concerne le fait que ledit au moins un organe de montage 61 est configuré pour se déplacer selon une direction déterminée. Les moyens de fixation (63 ; 63') d'une telle embase 62 sont, alors, alignés selon une direction perpendiculaire à la direction de déplacement dudit au moins un organe de montage 61. Une telle caractéristique permet, avantageusement, de faciliter le passage d'une telle embase 62 par-dessus ledit au moins un organe de renvoi (60 ; 60').

Tel que mentionné ci-dessus, le dispositif 1 comporte une pluralité de doigts (4, 4a, 4b, 4c, 4d, 4e, 4f, 4g, 4h, 4i, 4j, 4k).

Aussi et selon une caractéristique additionnelle, chaque doigt (4, 4a, 4b, 4c, 4d, 4e, 4f, 4g, 4h, 4i, 4j, 4k) de ladite pluralité de doigts (4, 4a, 4b, 4c, 4d, 4e, 4f, 4g, 4h, 4i, 4j, 4k) est solidarisé de l'une desdites embases 62, ceci par l'intermédiaire de moyens de solidarisation 40. Une telle caractéristique permet, avantageusement et en cas de défaillance ou de dégradation d'un tel doigt (4, 4a, 4b, 4c, 4d, 4e, 4f, 4g, 4h, 4i, 4j, 4k) de faciliter le démontage et le remplacement de ce doigt (4, 4a, 4b, 4c, 4d, 4e, 4f, 4g, 4h, 4i, 4j, 4k).

A ce propos, on observera que ces moyens de solidarisation 40 sont positionnés de part et d'autre de l'orifice traversant 620 que comporte une telle embase 62 et/ou sont positionnés de part et d'autre d'au moins un desdits moyens de fixation (63 ; 63') et/ou sont alignés selon une direction perpendiculaire à la direction de déplacement dudit au moins un organe de montage 61.

Une autre caractéristique concerne le fait que les doigts (4, 4a, 4b, 4c, 4d, 4e, 4f, 4g, 4h, 4i, 4j, 4k) de la pluralité de doigts (4, 4a, 4b, 4c, 4d, 4e, 4f, 4g, 4h, 4i, 4j, 4k) comportent, chacun, d'une part, une première portion 41 qui est solidaire des moyens de montage 6, plus particulièrement de l'une des embases 62 de ces moyens de montage 6 et/ou par l'intermédiaire des moyens de solidarisation 40 susmentionnés.

En fait, la première portion 41 d'un tel doigt (4, 4a, 4b, 4c, 4d, 4e, 4f, 4g, 4h, 4i, 4j, 4k) comporte un tube 410, qui présente un canal traversant 411, et qui est rendu solidaire d'une telle embase 62.

Cette première portion 41 d'un tel doigt (4, 4a, 4b, 4c, 4d, 4e, 4f, 4g, 4h, 4i, 4j, 4k) peut, également, comporter une collerette 412, qui équipe extérieurement une extrémité du tube 410, qui est rendue solidaire de l'une des embases 62 des moyens de montage 6 (plus particulièrement par l'intermédiaire desdits moyens de solidarisation 40 susmentionnés), et qui présente un orifice traversant qui se situe en regard et/ou dans le prolongement du canal traversant 411 du tube 410 de la première portion 41 d'un tel doigt (4, 4a, 4b, 4c, 4d, 4e, 4f, 4g, 4h, 4i, 4j, 4k).

Une autre caractéristique concerne le fait qu'au moins un des orifices traversants 611 de l'organe de montage 61 et/ou l'orifice traversant 620 d'au moins une des embases 62 des moyens de montage 6 se situe dans le prolongement du canal traversant 411 du tube 410 de la première portion 41 d'au moins un des doigts (4, 4a, 4b, 4c, 4d, 4e, 4f, 4g, 4h, 4i, 4j , 4k) de la pluralité de doigts (4, 4a, 4b, 4c, 4d, 4e, 4f, 4g, 4h, 4i, 4j , 4k).

En fait, les orifices traversants 611 de l'organe de montage 61 et l'orifice traversant 620 des embases 62 des moyens de montage 6 se situent, chacun, dans le prolongement du canal traversant 411 du tube 410 de la première portion 41 de l'un des doigts (4, 4a, 4b, 4c, 4d, 4e, 4f, 4g, 4h, 4i, 4j, 4k) de la pluralité de doigts (4, 4a, 4b, 4c, 4d, 4e, 4f, 4g, 4h, 4i, 4j, 4k).

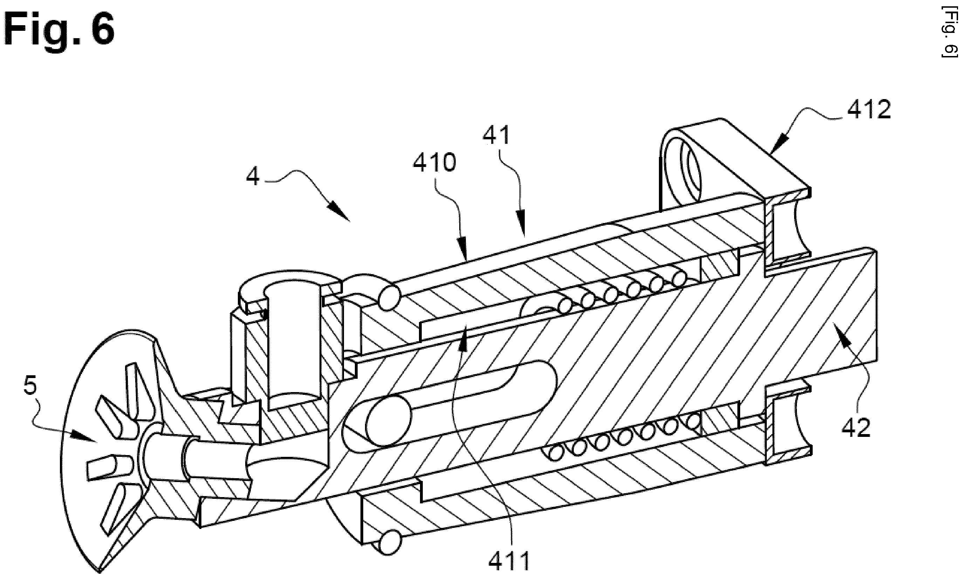

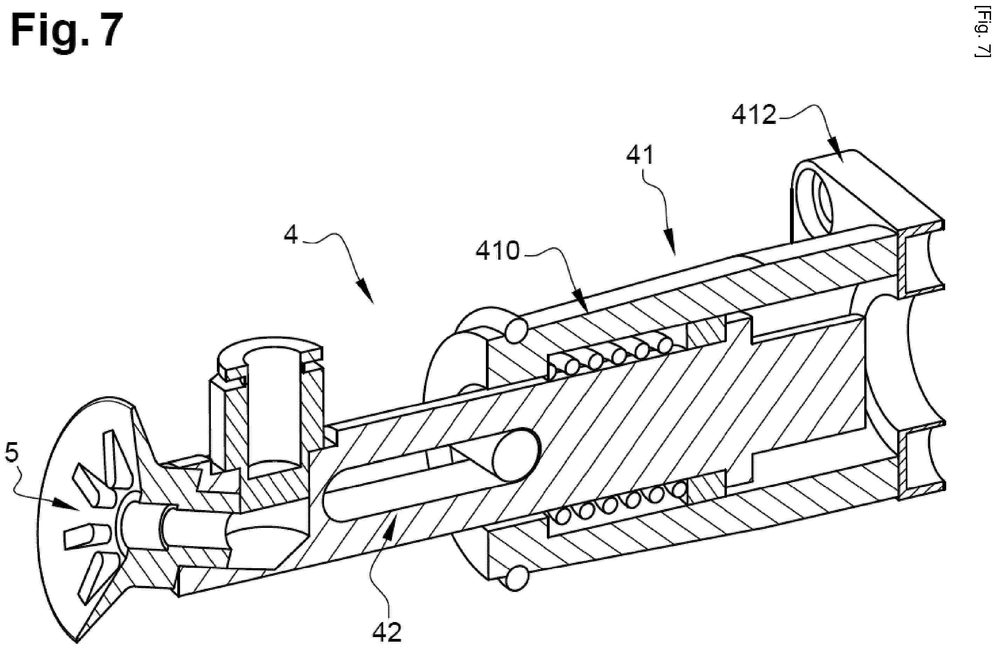

D'autre part, les doigts (4, 4a, 4b, 4c, 4d, 4e, 4f, 4g, 4h, 4i, 4j, 4k) de la pluralité de doigts (4, 4a, 4b, 4c, 4d, 4e, 4f, 4g, 4h, 4i, 4j, 4k) comportent, chacun, une deuxième portion 42, qui comporte le moyen de réception 5, et qui est mobile (plus particulièrement de manière télescopique) par rapport à la première portion 41 d'un tel doigt (4, 4a, 4b, 4c, 4d, 4e, 4f, 4g, 4h, 4i, 4j, 4k), ceci entre une position rétractée (figure 6) et une position déployée (figure 7) par rapport à la première portion 41 d'un tel doigt (4, 4a, 4b, 4c, 4d, 4e, 4f, 4g, 4h, 4i, 4j, 4k).

Cette deuxième portion 42 d'un tel doigt (4, 4a, 4b, 4c, 4d, 4e, 4f, 4g, 4h, 4i, 4j, 4k) comporte un coulisseau qui coulisse au moins à l'intérieur du canal traversant 411 du tube 410 de la première portion 41 de ce doigt (4, 4a, 4b, 4c, 4d, 4e, 4f, 4g, 4h, 4i, 4j, 4k).

A ce propos, on observera que la deuxième portion 42 d'un tel doigt (4, 4a, 4b, 4c, 4d, 4e, 4f, 4g, 4h, 4i, 4j, 4k) s'étend selon un axe tandis que le moyen de réception 5 s'étend selon un autre axe qui forme un angle non nul (plus particulièrement compris entre 05° et 45°, notamment compris entre 15° et 30°, de préférence de l'ordre de 15°) avec l'axe selon lequel s'étend la deuxième portion 42 du doigt (4, 4a, 4b, 4c, 4d, 4e, 4f, 4g, 4h, 4i, 4j, 4k).

Cette caractéristique permet, avantageusement et en positionnant le dispositif 1 perpendiculairement à l'élément de véhicule automobile pour déposer une pastille adhésive, de positionner le moyen de réception 5 en sorte que l'axe selon lequel s'étend ce moyen de réception 5 forme un angle non droit avec l'élément de véhicule automobile, plus particulièrement avec la surface sur laquelle ladite pastille adhésive doit être déposée. Ceci permet, alors avantageusement, de déposer une telle pastille adhésive sur ledit élément de véhicule automobile en commençant par un bord de cette pastille adhésive et en assurant ensuite un effet de lissage, ceci à l'instar d'un dépôt de pastille adhésive réalisé manuellement. Il en découle une amélioration de l'adhésion de la pastille adhésive sur l'élément de véhicule automobile.

Une autre caractéristique concerne le fait que le moyen de réception 5 que comporte au moins un des doigts (4, 4a, 4b, 4c, 4d, 4e, 4f, 4g, 4h, 4i, 4j, 4k) de la pluralité de doigts (4, 4a, 4b, 4c, 4d, 4e, 4f, 4g, 4h, 4i, 4j, 4k) présente une taille et/ou une forme différente(s) de celle(s) que présente au moins un autre doigt de cette pluralité de doigts (4, 4a, 4b, 4c, 4d, 4e, 4f, 4g, 4h, 4i, 4j, 4k). Une telle caractéristique permet, avantageusement, de déposer des pastilles adhésives de taille et/ou de forme et/ou de consistance différentes.

En fait, un tel moyen de réception 5 adopte, de préférence, la forme d'une ventouse, de préférence conique, ou analogue.

Une telle ventouse conique s'étend, alors, selon un axe qui est un axe de révolution autour duquel tourne la surface de cette ventouse conique.

Cet axe correspond, alors, à l'axe selon lequel s'étend ledit moyen de réception 5.

A ce propos, on observera que, lorsqu'on souhaite déposer une pastille adhésive sur l'élément de véhicule automobile, on positionne cette pastille adhésive au sein du moyen de réception 5 (plus particulièrement au sein de la ventouse) et on retient cette pastille adhésive au sein de ce moyen de réception 5 (plus particulièrement par réalisation d'une dépression ou d'un vide au sein de cette ventouse, notamment par aspiration). Ce moyen de réception 5 et/ou la pastille adhésive est, alors, amené(e) en contact avec cet élément de véhicule automobile, plus particulièrement au niveau d'un bord de ce moyen de réception 5 et/ou de cette pastille adhésive (ceci tel que décrit ci-dessus). Lorsqu'on atteint une force d'appui déterminée (notamment relevée par un capteur de pression et/ou par un pressostat) dudit moyen de réception 5 et/ou de la pastille adhésive sur l'élément de véhicule automobile, on interrompt la dépression ou on casse le vide (notamment par interruption de l'aspiration). Le moyen de réception 5 (plus particulièrement la ventouse) reprend sa forme initiale ce qui a pour effet de plaquer la pastille adhésive sur l'élément de véhicule automobile, ceci avec un effet de lissage qui améliore l'adhésion de la pastille adhésive sur l'élément de véhicule automobile.

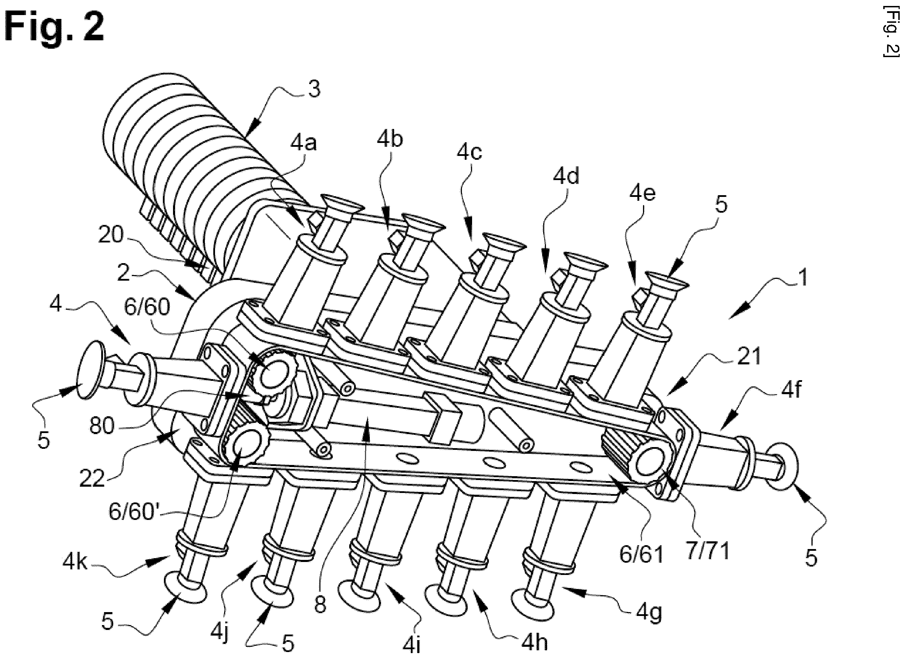

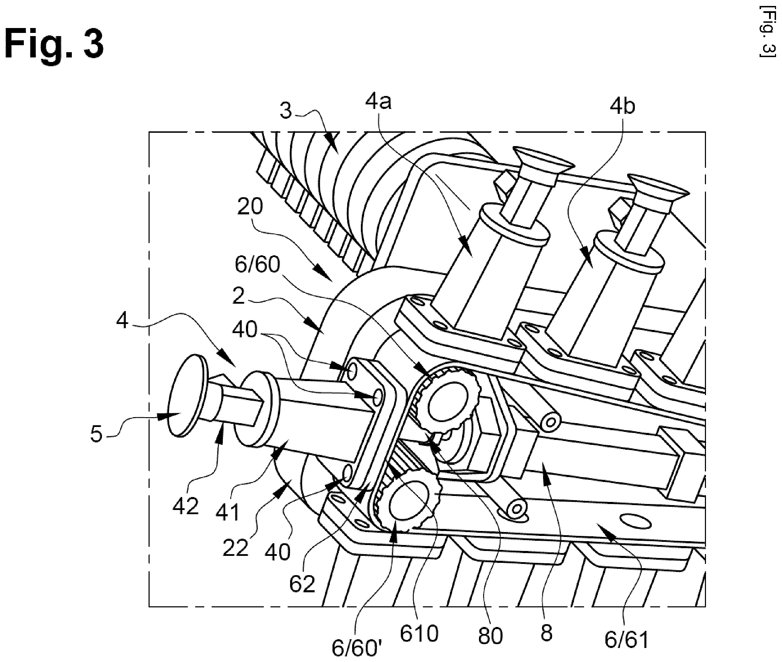

Une autre caractéristique concerne le fait que le support 2 comporte un actionneur 8 qui comporte un organe d'actionnement 80 qui est mobile entre une position rétractée (figures 2 et 3) par rapport audit au moins un organe de montage 61 et une position déployée dans laquelle cet organe d'actionnement 80, d'une part, traverse un des orifices traversants 611 que présente ledit au moins un organe de montage 61 et/ou l'orifice traversant 620 que présente l'une des embases 62 des moyens de montage 6 et, d'autre part, coopère avec la deuxième portion 42 de l'un des doigts (4, 4a, 4b, 4c, 4d, 4e, 4f, 4g, 4h, 4i, 4j, 4k) de la pluralité de doigts (4, 4a, 4b, 4c, 4d, 4e, 4f, 4g, 4h, 4i, 4j, 4k), plus particulièrement du doigt actif 4.

Selon une autre caractéristique, l'organe d'actionnement 80 s'étend au moins de manière parallèle à l'axe selon lequel s'étend le support 2.

De manière alternative ou (et de préférence) additionnelle, l'organe d'actionnement 80 s'étend entre les deux organes de renvoi (60 ; 60') que comportent les moyens de montage 6.

Tel que mentionné ci-dessus, le dispositif 1 comporte des moyens d'entraînement 7. Ces moyens d'entraînement 7 comportent, d'une part, un moteur d'entraînement 70 qui est monté (plus particulièrement en étant rapporté) sur le support 2 et, d'autre part, un organe d'entraînement 71, qui est monté en rotation sur le support 2 (plus particulièrement à proximité de l'extrémité distale 21 de ce support 2 et/ou du côté opposé de ce support 2 par rapport au moteur d'entraînement 70), qui est entraîné en rotation par le moteur d'entraînement 70, qui coopère avec les moyens de montage 6 (plus particulièrement avec ledit au moins un organe de montage 61), et qui entraîne ces moyens de montage 6.

Ledit organe d'entraînement 71 peut être constitué par un pignon, une roue dentée ou analogue.

Une autre caractéristique concerne le fait que le dispositif 1 comporte des moyens de positionnement et/ou de réglage de la position des moyens d'entraînement 7 par rapport aux moyens de montage 6.

En fait, ces moyens de positionnement et/ou de réglage sont, plus particulièrement, configurés pour assurer le positionnement et/ou le réglage de la position de l'organe d'entraînement 71 par rapport audit au moins un organe de renvoi (60 ; 60') et/ou par rapport audit au moins un organe de montage 61.

Ces moyens de positionnement et/ou de réglage permettent, avantageusement, d'utiliser des organes de montage 61 de dimensions différentes, plus particulièrement de longueurs différentes et/ou comportant un nombre d'embases 62 (et donc un nombre de doigts 4, 4a, 4b, 4c, 4d, 4e, 4f, 4g, 4h, 4i, 4j, 4k) différent.

Le dispositif décrit ci-dessus permet de mettre en oeuvre un procédé pour déposer au moins une pastille adhésive sur un élément de véhicule automobile.

Ce procédé consiste en ce qu'on déplace le dispositif 1 par l'intermédiaire du bras articulé 3 que comporte le robot, ceci en sorte que le moyen de réception 5, que comporte au moins un des doigts de la pluralité de doigts (4, 4a, 4b, 4c, 4d, 4e, 4f, 4g, 4h, 4i, 4j, 4k), soit positionné, chacun, au moins à proximité d'un système (plus particulièrement constitué par un dévidoir ou analogue) qui contient au moins une pastille adhésive à déposer.

Selon un mode de réalisation particulier, ce procédé peut consister en ce qu'on déplace le dispositif 1 en sorte que le moyen de réception 5, que comportent les doigts d'un ensemble de doigts de la pluralité de doigts (4, 4a, 4b, 4c, 4d, 4e, 4f, 4g, 4h, 4i, 4j, 4k), soit positionné, chacun, au moins à proximité d'un système (plus particulièrement constitué par un dévidoir ou analogue) qui contient au moins une pastille adhésive à déposer.

Le procédé consiste, ensuite, en ce qu'on positionne et qu'on retienne une telle pastille adhésive au sein du moyen de réception 5 (plus particulièrement au sein de la ventouse d'un tel moyen de réception 5) que comporte au moins un des doigts de la pluralité de doigts (4, 4a, 4b, 4c, 4d, 4e, 4f, 4g, 4h, 4i, 4j, 4k), voire que comportent les doigts de l'ensemble de doigts de la pluralité doigts (4, 4a, 4b, 4c, 4d, 4e, 4f, 4g, 4h, 4i, 4j, 4k).

En fait, on retient une telle pastille adhésive en réalisant une dépression ou un vide au sein d'un tel moyen de réception 5 (plus particulièrement au sein d'une ventouse qui constitue un tel moyen de réception 5).

On observera que, lorsqu'on a positionné et lorsqu'on retient une pastille adhésive au sein du moyen de réception 5 d'un seul doigt de la pluralité de doigts (4, 4a, 4b, 4c, 4d, 4e, 4f, 4g, 4h, 4i, 4j, 4k), respectivement au sein du moyen de réception 5 des doigts d'un seul ensemble de doigts de la pluralité doigts (4, 4a, 4b, 4c, 4d, 4e, 4f, 4g, 4h, 4i, 4j, 4k), le procédé peut, encore, consister en ce qu'on actionne les moyens d'entraînement 7 et/ou le bras articulé 3, ceci en sorte que le moyen de réception 5 d'au moins un autre doigt de la pluralité de doigts (4, 4a, 4b, 4c, 4d, 4e, 4f, 4g, 4h, 4i, 4j, 4k), respectivement que le moyen de réception 5 des doigts d'un autre ensemble de doigts de la pluralité de doigts (4, 4a, 4b, 4c, 4d, 4e, 4f, 4g, 4h, 4i, 4j, 4k), soit positionné, chacun, au moins à proximité d'un système (plus particulièrement constitué par un dévidoir ou analogue) qui contient au moins une pastille adhésive à déposer. Là encore, on positionne et on retient une telle pastille adhésive au sein d'au moins un tel moyen de réception 5 (de cet autre doigt ou des doigts de cet autre ensemble de doigts), ceci de la manière décrite ci-dessus.

Le procédé consiste, alors, en ce qu'on déplace le dispositif 1 par l'intermédiaire du bras articulé 3 que comporte le robot et qu'on amène le moyen de réception 5 que comporte un doigt (plus particulièrement constitué par le doigt actif 4 mentionné ci-dessus) de la pluralité de doigts (4, 4a, 4b, 4c, 4d, 4e, 4f, 4g, 4h, 4i, 4j, 4k) et/ou la pastille adhésive (qui est retenue par un tel moyen de réception 5) en contact avec cet élément de véhicule automobile, plus particulièrement au niveau d'un bord de ce moyen de réception 5 et/ou de cette pastille adhésive (ceci tel que décrit ci-dessus).

A ce propos, on observera que, avant d'amener un tel moyen de réception 5 et/ou une telle pastille adhésive en contact avec l'élément de véhicule automobile, le procédé peut encore consister en ce qu'on actionne les moyens d'entraînement 7 en sorte que l'un des doigts de la pluralité de doigts (4, 4a, 4b, 4c, 4d, 4e, 4f, 4g, 4h, 4i, 4j, 4k) adopte la position active de dépôt d'une telle pastille adhésive et constitue, ainsi, le doigt actif 4 mentionné ci-dessus.

Ce procédé consiste, ensuite, en ce que, lorsque le moyen de réception 5 et/ou la pastille adhésive est en contact avec l'élément de véhicule automobile, on libère la pastille adhésive qui se dépose alors sur l'élément de véhicule automobile.

A ce propos, on observera que, avant de libérer une telle pastille, on peut relever (notamment par l'intermédiaire d'un capteur de pression et/ou d'un pressostat) une force d'appui de ce moyen de réception 5 et/ou de cette pastille adhésive sur cet élément de véhicule automobile et en ce que, lorsque cette force d'appui atteint ou dépasse une force d'appui déterminée, on libère la pastille adhésive qui se dépose alors sur l'élément de véhicule automobile.

Une autre caractéristique consiste en ce que, pour libérer la pastille adhésive, on interrompt la dépression ou on casse le vide (notamment par interruption de l'aspiration) de sorte que le moyen de réception 5 (plus particulièrement la ventouse) reprend sa forme initiale ce qui a pour effet de plaquer la pastille adhésive sur l'élément de véhicule automobile, ceci avec un effet de lissage qui améliore l'adhésion de la pastille adhésive sur l'élément de véhicule automobile.

Le procédé consiste, ensuite, à éloigner le dispositif 1 par rapport à l'élément de véhicule automobile et à actionner les moyens d'entraînement 7 en sorte qu'un autre des doigts de la pluralité de doigts (4, 4a, 4b, 4c, 4d, 4e, 4f, 4g, 4h, 4i, 4j, 4k) adopte la position active de dépôt d'une pastille adhésive et constitue, alors, le (nouveau) doigt actif 4 mentionné ci-dessus.

A ce propos, on observera que cet autre doigt, soit est constitué par le doigt qui succède (au sein des moyens de montage 6, plus particulièrement le long dudit organe de montage 61) au doigt qui vient de déposer la pastille adhésive, soit est constitué par un doigt qui ne succède pas (au sein des moyens de montage 6, plus particulièrement le long dudit organe de montage 61) au doigt qui vient de déposer la pastille adhésive.

Le procédé consiste, ensuite, en ce qu'on répète les étapes décrites ci-dessus, notamment en ce qu'on déplace le dispositif 1 (par l'intermédiaire du bras articulé 3 que comporte le robot) et en ce qu'on amène le moyen de réception 5 que comporte un doigt (plus particulièrement constitué par le doigt actif 4 mentionné ci-dessus) de la pluralité de doigts (4, 4a, 4b, 4c, 4d, 4e, 4f, 4g, 4h, 4i, 4j, 4k) et/ou la pastille adhésive (qui est retenue par un tel moyen de réception 5) en contact avec cet élément de véhicule automobile, plus particulièrement au niveau d'un bord de ce moyen de réception 5 et/ou de cette pastille adhésive (ceci tel que décrit ci-dessus). Et ainsi de suite.

## Revendications

1. Dispositif (1) de dépose d'au moins une pastille adhésive sur un élément de véhicule automobile, ce dispositif (1) comporte, d'une part, un support (2), qui est configuré pour être rendu solidaire du bras articulé (3) d'un robot, et qui présente une forme allongée ainsi qu'au moins une extrémité proximale (20), d'autre part, une pluralité de doigts (4, 4a, 4b, 4c, 4d, 4e, 4f, 4g, 4h, 4i, 4j, 4k), qui sont mobiles, chacun, par rapport au support (2), qui comportent, chacun, un moyen de réception (5) configuré pour recevoir une pastille adhésive dans l'attente d'être déposée, et qui comportent au moins un doigt actif (4), qui adopte une position active de dépôt d'une telle pastille adhésive par rapport au support (2), et qui fait saillie par rapport à ladite au moins une extrémité proximale (20) du support (2), d'autre part encore, des moyens de montage (6) qui sont configurés pour monter les doigts (4, 4a, 4b, 4c, 4d, 4e, 4f, 4g, 4h, 4i, 4j, 4k) de la pluralité de doigts (4, 4a, 4b, 4c, 4d, 4e, 4f, 4g, 4h, 4i, 4j, 4k) en déplacement par rapport au support (2) et, d'autre part aussi, des moyens d'entraînement (7) qui sont configurés pour entraîner les moyens de montage (6) en déplacement par rapport au support (2), **caractérisé par le fait que** les moyens de montage (6) comportent, d'une part, au moins un organe de renvoi (60 ; 60') qui est monté en rotation sur le support (2) et, d'autre part, au moins un organe de montage (61), duquel les doigts (4, 4a, 4b, 4c, 4d, 4e, 4f, 4g, 4h, 4i, 4j, 4k) de la pluralité de doigts (4, 4a, 4b, 4c, 4d, 4e, 4f, 4g, 4h, 4i, 4j, 4k) sont rendus solidaires, et qui coopère avec ledit au moins un organe de renvoi (60 ; 60').

2. Dispositif (1) selon la revendication 1, **caractérisé par le fait que** le support (2) s'étend selon un axe tandis que les moyens de montage (6) comportent deux organes de renvoi (60 ; 60') qui sont positionnés à proximité de l'extrémité proximale (20) du support (2) ainsi que de part et d'autre de l'axe selon lequel s'étend le support (2).

3. Dispositif (1) selon l'une quelconque des revendications 1 ou 2, **caractérisé par le fait que** ledit au moins un organe de montage (61) est de type souple et est constitué par une courroie, une ceinture ou analogue, de préférence crantée.

4. Dispositif (1) selon la revendication 2, **caractérisé par le fait que** ledit au moins un organe de montage (61) comporte une portion (610), qui est positionnée à proximité de l'extrémité proximale (20) du support (2), de laquelle ledit au moins un doigt actif (4) est rendu solidaire, et qui s'étend par-dessus les deux organes de renvoi (60 ; 60') et/ou qui coopère avec ces deux organes de renvoi (60 ; 60').

5. Dispositif (1) selon l'une quelconque des revendications précédentes, **caractérisé par le fait que** les moyens de montage (6) comportent une pluralité d'embases (62) qui sont fixées, chacune, sur ledit au moins un organe de montage (61) tandis que chaque doigt (4, 4a, 4b, 4c, 4d, 4e, 4f, 4g, 4h, 4i, 4j, 4k) de ladite pluralité de doigts (4, 4a, 4b, 4c, 4d, 4e, 4f, 4g, 4h, 4i, 4j, 4k) est solidarisé de l'une de ces embases (62).

6. Dispositif (1) selon les revendications 2 et 5, **caractérisé par le fait que** les embases (62) de la pluralité d'embases (62) sont configurées pour s'étendre par-dessus les deux organes de renvoi (60 ; 60'), ceci lorsqu'une telle embase (62) est positionnée au niveau de l'extrémité proximale (20) du support (2).

7. Dispositif (1) selon la revendication 5, **caractérisé par le fait que** ledit au moins un organe de montage (61) présente une pluralité d'orifices traversants (611) tandis que les embases (62) de la pluralité d'embases (62) présentent, chacune, un orifice traversant (620) qui se situe, chacun, en regard de l'un des orifices traversants (611) dudit au moins un organe de montage (61).

8. Dispositif (1) selon l'une quelconque des revendications précédentes, **caractérisé par le fait que** les doigts (4, 4a, 4b, 4c, 4d, 4e, 4f, 4g, 4h, 4i, 4j, 4k) de la pluralité de doigts (4, 4a, 4b, 4c, 4d, 4e, 4f, 4g, 4h, 4i, 4j, 4k) comportent, chacun, d'une part, une première portion (41) qui est solidaire des moyens de montage (6) et, d'autre part, une deuxième portion (42), qui comporte le moyen de réception (5), et qui est mobile par rapport à la première portion (41) d'un tel doigt (4, 4a, 4b, 4c, 4d, 4e, 4f, 4g, 4h, 4i, 4j, 4k), ceci entre une position rétractée et une position déployée par rapport à la première portion (41).

9. Dispositif (1) selon la revendication 8, **caractérisé par le fait que** la première portion (41) d'un tel doigt (4, 4a, 4b, 4c, 4d, 4e, 4f, 4g, 4h, 4i, 4j, 4k) comporte un tube (410) qui présente un canal traversant (411) tandis que la deuxième portion (42) d'un tel doigt comporte un coulisseau qui coulisse au moins à l'intérieur du canal traversant (411) du tube (410) de la première portion (41) de ce doigt (4, 4a, 4b, 4c, 4d, 4e, 4f, 4g, 4h, 4i, 4j, 4k).

10. Dispositif (1) selon les revendications 7 et 9, **caractérisé par le fait qu'**au moins un des orifices traversants (611) de l'organe de montage (61) et/ou l'orifice traversant (620) d'au moins une des embases (62) des moyens de montage (6) se situe dans le prolongement du canal traversant (411) du tube (410) de la première portion (41) d'au moins un des doigts (4, 4a, 4b, 4c, 4d, 4e, 4f, 4g, 4h, 4i, 4j, 4k) de la pluralité de doigts (4, 4a, 4b, 4c, 4d, 4e, 4f, 4g, 4h, 4i, 4j, 4k).

11. Dispositif (1) selon la revendication 8, **caractérisé par le fait que** la deuxième portion (42) d'un tel doigt (4, 4a, 4b, 4c, 4d, 4e, 4f, 4g, 4h, 4i, 4j, 4k) s'étend selon un axe tandis que le moyen de réception (5) s'étend selon un autre axe qui forme un angle non nul avec l'axe selon lequel s'étend la deuxième portion (42) du doigt (4, 4a, 4b, 4c, 4d, 4e, 4f, 4g, 4h, 4i, 4j, 4k).

12. Dispositif (1) selon les revendications 7 et 8, **caractérisé par le fait que** le support (2) comporte un actionneur (8) qui comporte un organe d'actionnement (80) qui est mobile entre une position rétractée par rapport audit au moins un organe de montage (61) et une position déployée dans laquelle cet organe d'actionnement (80), d'une part, traverse un des orifices traversants (611) que présente ledit au moins un organe de montage (61) et/ou l'orifice traversant (620) que présente l'une des embases (62) des moyens de montage (6) et, d'autre part, coopère avec la deuxième portion (42) de l'un des doigts (4, 4a, 4b, 4c, 4d, 4e, 4f, 4g, 4h, 4i, 4j, 4k) de la pluralité de doigts (4, 4a, 4b, 4c, 4d, 4e, 4f, 4g, 4h, 4i, 4j, 4k), plus particulièrement du doigt actif (4).

13. Dispositif (1) selon l'une quelconque des revendications précédentes, **caractérisé par le fait que** les moyens d'entraînement (7) comportent, d'une part, un moteur d'entraînement (70) qui est monté sur le support (2) et, d'autre part, un organe d'entraînement (71), qui est monté en rotation sur le support (2), qui est entraîné en rotation par le moteur d'entrainement (70), qui coopère avec les moyens de montage (6), et qui entraîne ces moyens de montage (6).

14. Dispositif (1) selon l'une quelconque des revendications précédentes, **caractérisé par le fait qu'**il comporte des moyens de positionnement et/ou de réglage de la position des moyens d'entraînement (7) par rapport aux moyens de montage (6).

15. Dispositif (1) selon l'une quelconque des revendications précédentes, **caractérisé par le fait que** ledit au moins un organe de renvoi (60 ; 60') et/ou ledit organe d'entraînement (71) est constitué, chacun, par un pignon, une roue dentée ou analogue.

## Patentansprüche

1. Vorrichtung (1) zum Aufbringen mindestens eines Klebepads auf ein Kraftfahrzeugelement, wobei diese Vorrichtung (1) aufweist:
einerseits einen Träger (2), der konfiguriert ist, um mit einem Gelenkarm (3) eines Roboters verbunden zu werden, und der eine längliche Form sowie mindestens ein proximales Ende (20) aufweist,
andererseits mehrere Finger (4, 4a, 4b, 4c, 4d, 4e, 4f, 4g, 4h, 4i, 4j, 4k), die jeweils bezüglich des Trägers (2) beweglich sind, jeweils eine Empfangseinrichtung (5) aufweisen, die konfiguriert ist, um ein zum Aufbringen bereitgestelltes Klebepad zu empfangen, und mindestens einen aktiven Finger (4) aufweisen, der eine zum Aufbringen eines solchen Klebepads aktive Position bezüglich des Trägers (2) einnimmt und bezüglich des mindestens einen proximalen Endes (20) des Trägers (2) vorragt,
andererseits dazu noch Montageeinrichtungen (6), die konfiguriert sind, um die Finger (4, 4a, 4b, 4c, 4d, 4e, 4f, 4g, 4h, 4i, 4j, 4k) der mehreren Finger (4, 4a, 4b, 4c, 4d, 4e, 4f, 4g, 4h, 4i, 4j, 4k) daran anzubringen, so dass sie bezüglich des Trägers (2) verschiebbar sind, und
andererseits zudem Antriebseinrichtungen (7), die konfiguriert sind, um die Montageeinrichtungen (6) anzutreiben, um sie bezüglich des Trägers (2) zu verschieben,
**dadurch gekennzeichnet, dass** die Montageeinrichtungen (6) aufweisen:
mindestens ein Rücksendeelement (60; 60'), das drehbar an dem Träger (2) angebracht ist, und
mindestens ein Montageelement (61), mit dem die Finger (4, 4a, 4b, 4c, 4d, 4e, 4f, 4g, 4h, 4i, 4j, 4k) der mehreren Finger (4, 4a, 4b, 4c, 4d, 4e, 4f, 4g, 4h, 4i, 4j, 4k) verbunden werden und das mit dem mindestens einem Rücksendeelement (60, 60') zusammenwirkt.

2. Vorrichtung (1) nach Anspruch 1, **dadurch gekennzeichnet, dass** der Träger (2) sich entlang einer Achse erstreckt, während die Montageeinrichtungen (6) zwei Rücksendeelemente (60, 60') aufweisen, die nahe an dem proximalen Ende (20) des Trägers (2) sowie beiderseits der Achse, entlang der sich der Träger (2) erstreckt, angeordnet sind.

3. Vorrichtung (1) nach einem der Ansprüche 1 oder 2, **dadurch gekennzeichnet, dass** das mindestens eine Montageelement (61) vom flexiblen Typ ist und aus einem Riemen, Gurt oder dergleichen besteht, der vorzugsweise gekerbt ist.

4. Vorrichtung (1) nach Anspruch 2, **dadurch gekennzeichnet, dass** das mindestens eine Montageelement (61) einen Teil (610) aufweist,
der nahe an dem proximalen Ende (20) des Trägers (2) angeordnet ist,
mit dem der mindestens eine aktive Finger (4) verbunden wird, und
der sich über die zwei Rücksendeelemente (60, 60') erstreckt und/oder mit diesen zwei Rücksendeelementen (60, 60') zusammenwirkt.

5. Vorrichtung (1) nach einem der vorstehenden Ansprüche, **dadurch gekennzeichnet, dass** die Montageeinrichtungen (6) mehrere Basisplatten (62) aufweisen, die jeweils an dem mindestens einen Montageelement (61) befestigt sind, während jeder Finger (4, 4a, 4b, 4c, 4d, 4e, 4f, 4g, 4h, 4i, 4j, 4k) der mehreren Finger (4, 4a, 4b, 4c, 4d, 4e, 4f, 4g, 4h, 4i, 4j, 4k) mit einer dieser Basisplatten (62) verbunden ist.

6. Vorrichtung (1) nach Anspruch 2 und 5, **dadurch gekennzeichnet, dass** die Basisplatten (62) der mehreren Basisplatten (62) konfiguriert sind, um sich über die zwei Rücksendeelemente (60, 60') zu erstrecken, dies, wenn eine solche Basisplatte (62) im Bereich des proximalen Endes (20) des Trägers (2) positioniert ist.

7. Vorrichtung (1) nach Anspruch 5, **dadurch gekennzeichnet, dass** das mindestens eine Montageelement (61) mehrere Durchgangsöffnungen (611) aufweist, während die Basisplatten (62) der mehreren Basisplatten (62) jeweils eine Durchgangsöffnung (620) aufweisen, die einer der Durchgangsöffnungen (611) des mindestens einen Montageelements (61) gegenüberliegt.

8. Vorrichtung (1) nach einem der vorstehenden Ansprüche, **dadurch gekennzeichnet, dass** die Finger (4, 4a, 4b, 4c, 4d, 4e, 4f, 4g, 4h, 4i, 4j, 4k) der mehreren Finger (4, 4a, 4b, 4c, 4d, 4e, 4f, 4g, 4h, 4i, 4j, 4k) jeweils aufweisen:
einerseits einen ersten Teil (41) der mit den Montageeinrichtungen (6) verbunden ist, und
andererseits einen zweiten Teil (42), der die Empfangseinrichtung (5) aufweist und bezüglich des ersten Teils (41) eines solchen Fingers (4, 4a, 4b, 4c, 4d, 4e, 4f, 4g, 4h, 4i, 4j, 4k) bewegbar ist, dies zwischen einer zurückgezogenen Position und einer ausgefahrenen Position bezüglich des ersten Teils (41).

9. Vorrichtung (1) nach Anspruch 8, **dadurch gekennzeichnet, dass** der erste Teil (41) eines solchen Fingers (4, 4a, 4b, 4c, 4d, 4e, 4f, 4g, 4h, 4i, 4j, 4k) eine Röhre (410) aufweist, die einen Durchgangskanal (411) aufweist, während der zweite Teil (42) eines solchen Fingers einen Schieber aufweist, der zumindest im Inneren des Durchgangskanals (411) der Röhre (410) des ersten Teils (41) dieses Fingers (4, 4a, 4b, 4c, 4d, 4e, 4f, 4g, 4h, 4i, 4j, 4k) gleitet.

10. Vorrichtung (1) nach Anspruch 7 und 9, **dadurch gekennzeichnet, dass** mindestens eine der Durchgangsöffnungen (611) des Montageelements (61) und/oder die Durchgangsöffnung (620) mindestens einer der Basisplatten (62) der Montageeinrichtungen (6) in der Verlängerung des Durchgangskanals (411) der Röhre (410) des ersten Teils (41) mindestens eines der Finger (4, 4a, 4b, 4c, 4d, 4e, 4f, 4g, 4h, 4i, 4j, 4k) der mehreren Finger (4, 4a, 4b, 4c, 4d, 4e, 4f, 4g, 4h, 4i, 4j, 4k) liegt.

11. Vorrichtung (1) nach Anspruch 8, **dadurch gekennzeichnet, dass** der zweite Teil (42) eines solchen Fingers (4, 4a, 4b, 4c, 4d, 4e, 4f, 4g, 4h, 4i, 4j, 4k) sich entlang einer Achse erstreckt, während die Empfangseinrichtung (5) sich entlang einer anderen Achse erstreckt, die mit der Achse, entlang der sich der zweite Teil (42) des Fingers (4, 4a, 4b, 4c, 4d, 4e, 4f, 4g, 4h, 4i, 4j, 4k) erstreckt, einen Winkel von ungleich Null bildet.

12. Vorrichtung (1) nach Anspruch 7 und 8, **dadurch gekennzeichnet, dass** der Träger (2) einen Aktuator (8) aufweist, der ein Betätigungselement (80) aufweist, das zwischen einer bezüglich des mindestens einen Montageelements (61) zurückgezogenen Position und einer ausgefahrenen Position bewegbar ist, in der dieses Betätigungselement (80) einerseits durch eine der Durchgangsöffnungen (611), die das mindestens eine Montageelement (61) hat, und/oder durch die Durchgangsöffnung (620), die die eine der Basisplatten (62) der Montageeinrichtungen (6) hat, hindurchgeht und andererseits mit dem zweiten Teil (42) eines Fingers (4, 4a, 4b, 4c, 4d, 4e, 4f, 4g, 4h, 4i, 4j, 4k) der mehreren Finger (4, 4a, 4b, 4c, 4d, 4e, 4f, 4g, 4h, 4i, 4j, 4k), insbesondere des aktiven Fingers (4), zusammenwirkt.

13. Vorrichtung (1) nach einem der vorstehenden Ansprüche, **dadurch gekennzeichnet, dass** die Antriebseinrichtungen (7) aufweisen:
einerseits einen Antriebsmotor (70), der an dem Träger (2) angebracht ist, und
andererseits ein Antriebselement (71), das drehbar an dem Träger (2) angebracht ist, von dem Antriebsmotor (70) in Drehung versetzt wird, mit den Montageeinrichtungen (6) zusammenwirkt und diese Montageeinrichtungen (6) antreibt.

14. Vorrichtung (1) nach einem der vorstehenden Ansprüche, **dadurch gekennzeichnet, dass** sie aufweist: Einrichtungen zur Positionierung und/oder Steuerung der Position der Antriebseinrichtungen (7) bezüglich der Montageeinrichtungen (6).

15. Vorrichtung (1) nach einem der vorstehenden Ansprüche, **dadurch gekennzeichnet, dass** das mindestens eine Rücksendeelement (60; 60') und/oder das Antriebselement (71) aus einem Ritzel, einem Zahnrad oder dergleichen besteht.

## Claims

1. Device (1) for depositing at least one adhesive pad on a motor vehicle element, this device (1) includes, on the one hand, a support (2), which is configured to be secured to the articulated arm (3) of a robot, and which has an elongate shape as well as at least one proximal end (20), on the other hand, a plurality of fingers (4, 4a, 4b, 4c, 4d, 4e, 4f, 4g, 4h, 4i, 4j, 4k), which are each movable relative to the support (2), which each include a receiving means (5) configured to receive an adhesive pad waiting to be deposited, and which include at least one active finger (4), which adopts an active position for depositing such an adhesive pad relative to the support (2), and which protrudes relative to said at least one proximal end (20) of the support (2), on the other hand again, mounting means (6) which are configured to mount the fingers (4, 4a, 4b, 4c, 4d, 4e, 4f, 4g, 4h, 4i, 4j, 4k) of the plurality of fingers (4, 4a, 4b, 4c, 4d, 4e, 4f, 4g, 4h, 4i, 4j, 4k) moving relative to the support (2) and, on the other hand also, drive means (7) which are configured to drive the mounting means (6) moving relative to the support (2), **characterised in that** the mounting means (6) include, on the one hand, at least one return member (60; 60') which is rotatably mounted on the support (2) and, on the other hand, at least one mounting member (61), to which the fingers (4, 4a, 4b, 4c, 4d, 4e, 4f, 4g, 4h, 4i, 4j, 4k) of the plurality of fingers (4, 4a, 4b, 4c, 4d, 4e, 4f, 4g, 4h, 4i, 4j, 4k) are secured, and which cooperates with said at least one return member (60; 60').

2. Device (1) according to claim 1, **characterised in that** the support (2) extends along an axis while the mounting means (6) include two deflection members (60; 60') which are positioned near the proximal end (20) of the support (2) as well as on either side of the axis along which the support (2) extends.

3. Device (1) according to either one of claims 1 or 2, **characterised in that** said at least one mounting member (61) is of the flexible type and consists of a band, belt or similar, preferably notched.

4. Device (1) according to claim 2, **characterised in that** said at least one mounting member (61) includes a portion (610) which is positioned in the vicinity of the proximal end (20) of the support (2), to which said at least one active finger (4) is secured, and which extends over the two return members (60; 60') and/or which cooperates with these two return members (60; 60').

5. Device (1) according to any one of the preceding claims, **characterised in that** the mounting means (6) include a plurality of bases (62) which are each fixed to said at least one mounting member (61) while each finger (4, 4a, 4b, 4c, 4d, 4e, 4f, 4g, 4h, 4i, 4j, 4k) of said plurality of fingers (4, 4a, 4b, 4c, 4d, 4e, 4f, 4g, 4h, 4i, 4j, 4k) is secured to one of these bases (62).

6. Device (1) according to claims 2 and 5, **characterised in that** the bases (62) of the plurality of bases (62) are configured to extend over the two return members (60; 60'), this when such a base (62) is positioned at the proximal end (20) of the support (2).

7. Device (1) according to claim 5, **characterised in that** said at least one mounting member (61) has a plurality of through holes (611) while the bases (62) of the plurality of bases (62) each have a through hole (620) which is each located opposite one of the through holes (611) of said at least one mounting member (61).

8. Device (1) according to any one of the preceding claims, **characterised in that** the fingers (4, 4a, 4b, 4c, 4d, 4e, 4f, 4g, 4h, 4i, 4j, 4k) of the plurality of fingers (4, 4a, 4b, 4c, 4d, 4e, 4f, 4g, 4h, 4i, 4j, 4k) each include, on the one hand, a first portion (41) which is secured to the mounting means (6) and, on the other hand, a second portion (42) which includes the receiving means (5), and which is movable relative to the first portion (41) of such a finger (4, 4a, 4b, 4c, 4d, 4e, 4f, 4g, 4h, 4i, 4j, 4k), this between a retracted position and a deployed position relative to the first portion (41).

9. Device (1) according to claim 8, **characterised in that** the first portion (41) of such a finger (4, 4a, 4b, 4c, 4d, 4e, 4f, 4g, 4h, 4i, 4j, 4k) includes a tube (410) that has a through channel (411) while the second portion (42) of such a finger includes a slider that slides at least inside the through channel (411) of the tube (410) of the first portion (41) of this finger (4, 4a, 4b, 4c, 4d, 4e, 4f, 4g, 4h, 4i, 4j, 4k).

10. Device (1) according to claims 7 and 9, **characterised in that** at least one of the through holes (611) of the mounting member (61) and/or the through hole (620) of at least one of the bases (62) of the mounting means (6) is located in line with the through channel (411) of the tube (410) of the first portion (41) of at least one of the fingers (4, 4a, 4b), 4c, 4d, 4e, 4f, 4g, 4h, 4i, 4j, 4k) of the plurality of fingers (4, 4a, 4b, 4c, 4d, 4e, 4f, 4g, 4h, 4i, 4j, 4k).

11. Device (1) according to claim 8, **characterised in that** the second portion (42) of such a finger (4, 4a, 4b, 4c, 4d, 4e, 4f, 4g, 4h, 4i, 4j, 4k) extends along an axis while the receiving means (5) extends along another axis that forms a non-zero angle with the axis along which the second portion (42) of the finger (4, 4a, 4b, 4c, 4d, 4e, 4f, 4g, 4h, 4i, 4j, 4k) extends.

12. Device (1) according to claims 7 and 8, **characterised in that** the support (2) includes an actuator (8) which includes an actuating member (80) which is movable between a retracted position with respect to said at least one mounting member (61) and a deployed position in which this actuating member (80), on the one hand, passes through one of the through holes (611) that said at least one mounting member (61) has and/or the through hole (620) that one of the bases (62) of the mounting means (6) has and, on the other hand, cooperates with the second portion (42) of one of the fingers (4, 4a, 4b, 4c, 4d, 4e, 4f, 4g, 4h, 4i, 4j, 4k) of the plurality of fingers (4, 4a, 4b, 4c, 4d, 4e, 4f, 4g, 4h, 4i, 4j, 4k), more particularly the active finger (4).

13. Device (1) according to any one of the preceding claims, **characterised in that** the drive means (7) include, on the one hand, a drive motor (70) which is mounted on the support (2) and, on the other hand, a drive member (71) which is rotatably mounted on the support (2), which is rotatably driven by the drive motor (70), which cooperates with the mounting means (6) and which drives these mounting means (6).

14. Device (1) according to any one of the preceding claims, **characterised in that** it comprises means for positioning and/or adjusting the position of the drive means (7) with respect to the mounting means (6).

15. Device (1) according to any one of the preceding claims, **characterised in that** said at least one return member (60; 60') and/or said drive member (71) each consist of a pinion, a toothed wheel or similar.
